# EUROPEAN PATENT APPLICATION

(11) **EP 4 064 144 A1**
(43) Date of publication of application: **28.09.2022**
(21) Application number: 22157910.5
(22) Date of filing: 22.02.2022
(51) Int. Cl.: G06Q 10/00, G06Q 50/04

(54) **METHODS FOR IDENTIFYING KEY PERFORMANCE INDICATORS**

(30) Priority: 24.03.2021 US 202117210948
(71) Applicant: Honeywell International Inc., Charlotte, NC 28202 (US)
(72) Inventor: ROBERT, Alen, Charlotte, 28202 (US); TRENCHARD, Andrew J., Charlotte, 28202 (US); NARAYAN, Anand, Charlotte, 28202 (US)
(74) Representative: Houghton, Mark Phillip

(57) **Abstract**

A method and device is provided that uses historical process data for an industrial process run by an industrial process control and automation system having processing equipment and identified by tag names. The tag names and process data are stored in a database, and a processor and a memory implement a Key Performance Indicator (KPI) tag system, that identifies primary and secondary KPIs from the list of tag names and data values stored in the database and extracts a set of KPI tags from the primary and secondary KPIs storing the extracted KPI tags in the memory. In another embodiment the KPI tag system imports all of the Human Machine Interface (HMI) display files used in the industrial process and identifies the display file tag names and links to other HMI display files. Using an asset model of the process plant and the links to the other HMI displays, the Level 1 HMI displays are identified and KPI tag system generates and stores the KPI tags for the identified Level 1 HMI displays.

## Description

### TECHNICAL FIELD

This disclosure relates generally to industrial process control and automation systems. More specifically, this disclosure relates to methods for identifying KPI tags from existing industrial process control and automation system data and Human Machine Interface (HMI) display files.

### BACKGROUND

Continuous process industries such as refineries and power generation plants have a business objective to maximize production, minimize losses and improve efficiency throughout the lifetime of the process plant. Employees in such industries keep a continuous watch on the parameters of the process that they operate to meet production targets. In order to maintain an overall view of the process plant, a set of targeted Key Performance Indicators (KPI) are derived. A KPI is a well-defined measurement that monitors, analyzes, and optimizes production processes. with a view on their safety, quantity, energy, quality, and the cost involved in production process.

The operational performance and related economic benefits of the process is generally defined by one or more KPIs. Typically, KPIs are important operating targets or calculated KPI values that are based on a function of process parameters generally initially generated by sensors. Examples of KPI values include process throughput, conversion efficiency, safety, quantity, energy, quality, and cost involved in production process. The real-time continuous KPI values are collected and stored in a data historian that also stores process data from sensors which provides long term data storage that is separate from and is not utilized by the process control and automation system.

Several software applications have been deployed in the process industries to help plant operators monitor and control their processes efficiently. However, selection of KPI tags are often left to the choice and judgment of the plant operators. Selection and identification of KPIs are typically manually identified based on the knowledge and operations experience of the operator monitoring the process plant. For any software application which needs to show or use KPI data as the KPI tags of a process plant, it would be manually selected, configured, and maintained by the operator. Any changes to the KPI tags also need to be updated manually. It would therefore be advantageous to be able to provide a method which automatically identifies KPI tags from industrial process control and automation systems data.

### SUMMARY

This disclosure relates to a method and system for automatically identifying KPI tags from an existing industrial process control and automation systems data.

In a first embodiment, a method is provided that uses historical process data for an industrial process run by an industrial process control and automation system having processing equipment identified by tag names. The tag names and process data are stored in a database, and a processor and a memory implement a Key Performance Indicator (KPI) tag system, KPI tag system collects a list of tag names and data values stored in the database. The KPI tag system detects the KPI tag system primary KPIs from the tag names and process values. The KPI tag system of the method further detects secondary KPIs from the tag names and process values and extracts a set of KPI tags from the primary and secondary KPIs and stores the extracted KPI tags in the memory.

In a second embodiment, a computing device is provided comprising a processor having an associated memory configured for implementing a Key Performance Indicator (KPI) tag system that supports an industrial process run by an industrial processing control and automation system having processing equipment including a database of tag names and process data. The KPI tag system collecting from the database the list of tag names and process data and detecting primary KPIs from the list of the collected tag names and process data. The KPI tag system further detects secondary KPIs from the list of tag names and process data and extracts a set of KPIs tags from the primary and secondary KPIs storing the extracted KPI tags in the memory.

In a third embodiment, a method is provided that uses the Human Machine Interface (HMI) display files used to visualize the industrial process run by an industrial process control and automation system having processing equipment. The HMI display files include tag names residing in the HMI display files and a processor and a memory implementing a Key Performance Indicator (KPI) tag system. The KPI tag system imports all of the HMI display files used in the industrial process and identifies display file tag names and links to other HMI display files. The KPI tag system further identifies using an asset model of the process plant the Level 1 HMI displays of the industrial process using the links to the other HMI displays and the asset model. The KPI tag system generates and stores in the memory the KPI tags for the identified Level 1 HMI displays.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 illustrates an example industrial process control and automation system according to this disclosure;
FIG. 2 illustrates an example device for supporting the automatic identification of KPI tags from an industrial process control and automation system data according to this disclosure;
FIG. 3 illustrates an example block diagram representing a method for the automated identification of KPI tags from existing industrial process control and automation system data according to an example embodiment of this disclosure;
FIG. 4 illustrates an example of a Level 1 HMI display according to this disclosure; and
FIG. 5 illustrates an example block diagram representing a method for the automated identification of KPI tags from HMI display files according to another example embodiment of this disclosure.

### DETAILED DESCRIPTION

The figures, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

As noted above, industrial process controllers are one type of process controller routinely used to control the operations of an industrial processes of a process plant. Such process controllers can help to improve the performance of continuous or other industrial processes. For example, in an industrial processes, using a model-based controller, a controlled variable (CV) generally represents a process variable that can be measured or inferred and that is ideally controlled to be at or near a desired setpoint or within a desired range of values. A manipulated variable (MV) generally represents a process variable that can be adjusted in order to alter one or more controlled variables. A disturbance variable (DV) generally represents a process variable whose value can be considered but cannot be controlled. As a simple example, a flow rate of material through a pipe could denote a controlled variable, a valve opening for a valve that controls the flow rate of material could denote a manipulated variable, and an ambient temperature around the pipe or the valve could denote a disturbance variable.

The implementation of industrial process controllers in a process control and automation system often requires substantial investments of time, money, and effort. Even with high initial costs, however, the general expectation is that these costs can be recouped within months if not weeks of implementation. Therefore, it becomes advantageous to use KPI tags to sustain the performance of a systems controllers in order to realize the benefits that the systems controllers promise. Unfortunately, unless the KPI tags are properly selected and applied the performance of the process control and automation system often deteriorates over time due to changes in the operations of the process and the controller, operator actions, and artificially-constrained operating conditions, due in many cases to improper KPI tag selection.

Maintenance of controllers often requires experienced and trained engineers, who can be in short supply. It is also often difficult for a few control engineers to maintain all of the model-based controllers at an entire site. Monitoring applications are increasingly being used to help control engineers detect problems quickly and diagnose probable causes. These applications provide key KPIs to help the control engineers detect problems. However, even with conventional controllers and monitoring tools, various industries still face a number of challenges. For example, many of the KPI indicators in conventional monitoring tools are very technical and require additional skills to understand and interpret in order to take effective actions. Also, with skilled personnel in short supply, it is often useful or important to prioritize issues in terms of financial impacts, but current monitoring tools do not provide this insight. In addition, it may be difficult for process operations teams to understand the interconnection of multiple controllers and monitoring tools, and it may be difficult for operations managers to provide essential oversight.

This disclosure provides various methods for identifying KPI tags from the process data of an industrial control and automation system. The automated generation of KPI tags can minimize the impact of the performance degradation of the system controllers. Including the impacts expressed in economic terms, such as monetary losses. Improper selection of KPIs may impact the process plant as a "cost of lost opportunity" meaning, in this document, the impact measures the cost of not operating the process plant and its controllers at their full potential. Of course, the impacts from not operating the process plant at its full potential could be expressed in other ways, such as excess material usage, excess energy usage, or reduced product production. The "cost" referred to in a "cost of lost opportunity" can also serve as a measure of the excess material usage, excess energy usage, reduced product production, or other impact.

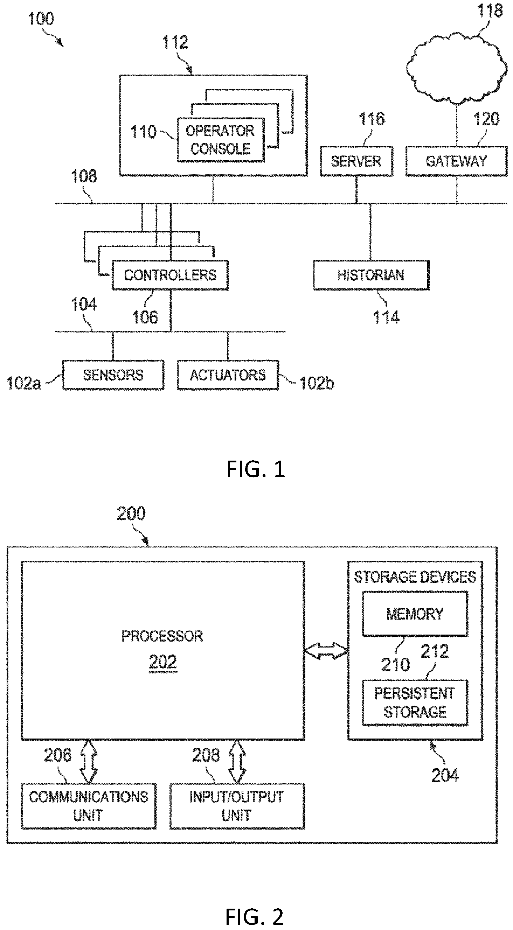

FIG. 1 illustrates an example industrial process control and automation system 100 according to this disclosure. As shown in FIG. 1, the system 100 includes various components that facilitate production or processing of at least one product or other material. For instance, the system 100 can be used to facilitate control over components in one or multiple industrial plants. Each plant represents one or more processing facilities (or one or more portions thereof), such as one or more manufacturing facilities for producing at least one product or other material. In general, each plant may implement one or more industrial processes and can individually or collectively be referred to as a process system. A process system generally represents any system or portion thereof configured to process one or more products or other materials in some manner.

In FIG. 1, the system 100 includes one or more sensors 102a and one or more actuators 102b. The sensors 102a and actuators 102b represent components in a process system that may perform any of a wide variety of functions. For example, the sensors 102a could measure a wide variety of characteristics in the process system, such as flow, pressure, or temperature. Also, the actuators 102b could alter a wide variety of characteristics in the process system, such as valve openings. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent at least one Ethernet network (such as one supporting a FOUNDATION FIELDBUS protocol), electrical signal network (such as a HART network), pneumatic control signal network, or any other or additional type(s) of network(s).

The system 100 also includes various controllers 106. The controllers 106 can be used in the system 100 to perform various functions in order to control one or more industrial processes. For example, a first set of controllers 106 may use measurements from one or more sensors 102a to control the operation of one or more actuators 102b. A second set of controllers 106 could be used to optimize the control logic or other operations performed by the first set of controllers. A third set of controllers 106 could be used to perform additional functions. The controllers 106 could therefore support a combination of approaches, such as regulatory control, advanced regulatory control, supervisory control, and advanced process control.

Each controller 106 includes any suitable structure for controlling one or more aspects of an industrial process. At least some of the controllers 106 could, for example, represent proportional-integral-derivative (PID) controllers or multivariable controllers, such as controllers implementing model predictive control (MPC) or other advanced predictive control (APC). As a particular example, each controller 106 could represent a computing device running a real-time operating system, a WINDOWS operating system, or other operating system.

At least one of the controllers 106 shown in FIG. 1 could denote a controller that operates using one or more process models. For example, each of these controllers 106 could operate using one or more process models to determine, based on measurements from one or more sensors 102a, how to adjust one or more actuators 102b. In some embodiments, each model associates one or more manipulated or disturbance variables (often referred to as independent variables) with one or more controlled variables (often referred to as dependent variables). Each of these controllers 106 could use an objective function to identify how to adjust its manipulated variables in order to push its controlled variables to the most attractive set of constraints.

At least one network 108 couples the controllers 106 and other devices in the system 100. The network 108 facilitates the transport of information between components. The network 108 could represent any suitable network or combination of networks. As particular examples, the network 108 could represent at least one Ethernet network.

Operator access to and interaction with the controllers 106 and other components of the system 100 can occur via various operator consoles 110. Each operator console 110 could be used to provide information to an operator and receive information from an operator. For example, each operator console 110 could provide information identifying a current state of an industrial process to the operator, such as values of various process variables and warnings, alarms, or other states associated with the industrial process. Each operator console 110 could also receive information affecting how the industrial process is controlled, such as by receiving setpoints or control modes for process variables controlled by the controllers 106 or other information that alters or affects how the controllers 106 control the industrial process. Each operator console 110 includes any suitable structure for displaying information to and interacting with an operator. For example, each operator console 110 could represent a computing device running a WINDOWS operating system or other operating system.

Multiple operator consoles 110 can be grouped together and used in one or more control rooms 112. Each control room 112 could include any number of operator consoles 110 in any suitable arrangement. In some embodiments, multiple control rooms 112 can be used to control an industrial plant, such as when each control room 112 contains operator consoles 110 used to manage a discrete part of the industrial plant.

The control and automation system 100 here may optionally include at least one historian 114 and/or one or more servers 116. The historian 114 represents a component that stores various information about the system 100. The historian 114 could, for instance, store information that is generated by the various controllers 106 during the control of one or more industrial processes. The historian 114 includes any suitable structure for storing and facilitating retrieval of information. Although shown as a single component here, the historian 114 could be located elsewhere in the system 100, or multiple historians could be distributed in different locations in the system 100.

Each server 116 denotes a computing device that executes applications for users of the operator consoles 110 or other applications. The applications could be used to support various functions for the operator consoles 110, the controllers 106, or other components of the system 100. Each server 116 could represent a computing device running a WINDOWS operating system or other operating system. Note that while shown as being local within the control and automation system 100, the functionality of the server 116 could be remote from the control and automation system 100. For instance, the functionality of the server 116 could be implemented in a computing cloud 118 or a remote server communicatively coupled to the control and automation system 100 via a gateway 120.

At least one component of the system 100 could support a mechanism for estimating impacts in advanced control operations for industrial control systems. For example, this functionality could be implemented in an operator console 110, a server 116, or a computing cloud 118 or remote server. Among other things, this functionality can be used to evaluate data associated with one or more controllers 106 to identify operational issues with the controller(s) 106, and the impacts of the identified operational issues can be determined. Visualizations can also be provided, such as on displays of the operator consoles 110, to help users identify the operational issues and their impacts. Ideally, this allows the operational issues to be prioritized and reduced or resolved, which can help to improve the operation of the controllers 106.

There are various ways in which this functionality can be used in order to support modifications to the operations of the controllers 106 or the underlying industrial processes. For example, in one example use case, this functionality can be used to provide a view of the top improvement opportunities for an industrial site, along with the associated costs to operations or other impacts in decreasing order of value. This allows site managers or other personnel to identify the best potential improvements that could be made to the industrial site. In another example use case, this functionality can be used to identify the long-term performance of model-based controllers in terms of total value, along with references to benchmark performance and maximum possible performance. This allows engineers or other personnel to identify controllers that are most in need of tuning or other maintenance. As yet another example use case, this functionality can be used to identify actionable metrics, such as in terms of the cost of lost opportunity per controller. This allows engineers or other personnel to focus on the most impactful problems. As still another example use case, this functionality can be used to calculate the cost of lost opportunity in a vendor-neutral way since these approaches can be used with model-based multivariable controllers from different suppliers. This allows managers, engineers, or other personnel to evaluate controller performance across multiple vendors in a consistent way. Of course, the functionality described in this patent document could be used in any other suitable manner.

Although FIG. 1 illustrates one example of an industrial process control and automation system 100, various changes may be made to FIG. 1. For example, the system 100 could include any number of sensors, actuators, controllers, networks, operator consoles, control rooms, historians, servers, and other components. Also, the makeup and arrangement of the system 100 in FIG. 1 is for illustration only. Components could be added, omitted, combined, further subdivided, or placed in any other suitable configuration according to particular needs. As a particular example, the historian 114 may be implemented in the computing cloud 118. Further, particular functions have been described as being performed by particular components of the system 100. This is for illustration only. In general, control and automation systems are highly configurable and can be configured in any suitable manner according to particular needs. In addition, FIG. 1 illustrates one example operational environment where impacts in advanced control operations for industrial control systems can be estimated. This functionality can be used in any other suitable system.

FIG. 2 illustrates an example device 200 for supporting the automatic identification of KPI tags from an industrial process control and automation system data according to this disclosure. The device 200 could, for example, denote a data analytics software application running on an operator console 110, server 116, or device used in the computing cloud 118 described above with respect to FIG. 1. However, the device 200 could be used in any other suitable system.

As shown in FIG. 2, the device 200 includes at least one processor 202, at least one storage device 204, at least one communications unit 206, and at least one input/output (I/O) unit 208. Each processor 202 can execute instructions, such as those that may be loaded into a memory 210. Each processor 202 can execute instructions, such as those that may be loaded into a memory 204. The instructions can implement a data analytics software program that identifies KPI tags from the existing system 100 described herein. Each processor 202 denotes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc. The persistent storage 212 can for example store the auto-detected KPI tags identified by device 200.

The communications unit 206 supports communications with other systems or devices. For example, the communications unit 206 could include a network interface card or a wireless transceiver facilitating communications over a wired or wireless network. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device.

Although FIG. 2 illustrates one example of a device 200 for supporting the automatic detection of KPI tags from an existing industrial process control and automation systems data, various changes may be made to FIG. 2. For example, components could be added, omitted, combined, further subdivided, or placed in any other suitable configuration according to particular needs. Also, computing devices can come in a wide variety of configurations, and FIG. 2 does not limit this disclosure to any particular configuration of computing device.

How variables are named in a process control and automation system can greatly simplify the software development and maintenance of the system. Users have gone from specifying individual memory addresses to having the ability to provide descriptive names. IEC 61131-3 compliant development applications go beyond this to include scoped variables, aliases, and data structure.

In modern automated systems, tag names are used that contain enough information to help the user to understand the types of information contained therein and how it fits into the larger control architecture. For example, including process and instrumentation diagram codes to the associated tag allows for the conceptual tie of an analog value directly to its corresponding physical location in the process. The data associated with a variable that ties to other information include data types (e.g., real, integer, discrete), data flow (e.g., input, output), usage (e.g., input/output, temporary variable, index counter), scope (e.g., local, global), process parameter (e.g., pressure, flow, temperature), and location usage (e.g., engine, compressor, turbocharger).

Tag naming conventions used in a process control and automation system include standards such as the American National standards Institute/International Society of Automation (ANSI/ISA) 5.1 Instrumentation Symbols and Identification. This standard includes definitions of device types (e.g., valves, switches, control valves, etc.). The standard also defines standard conventions for alarm limits (e.g., the function modifiers H and HH for high limit and high-high limits respectively). Identification letters were also defined based on the type of parameter being measured (e.g., the letter I is used for current measurements, F for flow, J for power, P for pressure, etc.) This standard is still commonly used to define instrument names on P&IDs. The use of the underscore character was used to separate blocks of data. For example, PT_103 would be used for pressure transmitter number 103. The standard also addresses parameters associated with that point such as a low-low alarm (e.g., PT_103_SUC_LL). In most cases, the transmitter number means little to the programmer except that the point can be tied back to a location on a drawing.

Ideally, tag names used by a process control and automation system identify the source/use of the data, the process being assessed and the location in the process. Tag names under the ANSI/ISA 5.1 standard are sufficiently descriptive such that a user can logically ascertain the parameter by looking at just the tag name. For example, P represents pressure, T represents transmitter, and SUC represents suction.

The process control and automation system of the present disclosure, for example system 100, collects process data from the various components of the system 100 and stores this data using tag names in the data historian 114. The data historian 114 represents a data storage component that stores various data information about system 100. The data historian 114 could, for instance, store data generated by the various controllers 306 during the control of one or more industrial processes, comprising tag names formatted in accordance with the ANSI/ISA 5.1 standards. Accordingly, data historian 114 stores the tag names being used by system 100 and thus makes it accessible to the analytics software of device 200. Alternately or additionally, the tag names and data from the process may be also stored in a cloud-based historian which will reside in the cloud and collect all important process data in one location.

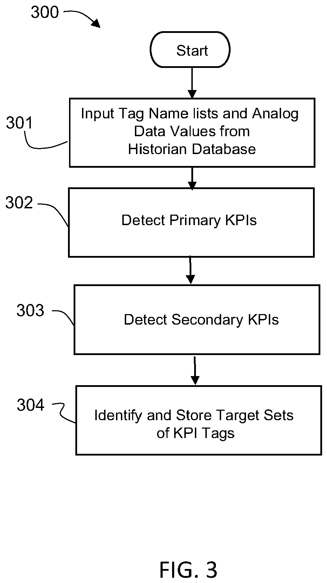

FIG. 3 is a block diagram representation of the data flow and functionality for an automated method for identifying KPI tags from existing industrial process control and automation system data, according to an example embodiment. The components of the automated KPI tag system 300 provides an online deployment of a data analytics system that automates the detection of KPI takes from the tag names and makes the detected KPI tags available to plant operators or other advanced analytics programs.

The KPI tag system 300 is generally realized as a computing device, such as the device 200 that has stored firmware embodied in a computer program run by a processor 202 of the computing device 200 for implementing the KPI tag system 300. The processor 202 can comprise a digital signal processor (DSP), a microcontroller, an application specific integrated circuit (ASIC), a general processor, or any other combination of one or more integrated processing devices. However, as known in the art, disclosed automated KPI tag identification systems may also be implemented by hardware. Regarding hardware-based implementations, algorithm equations can be converted into a digital logic gate pattern, such as using VHDL (a Hardware Description Language) that can then be realized using a programmable device such as a field-programmable gate array (FPGA) or a dedicated application-specific integrated circuit (ASIC) to implement the logic gate pattern. Regarding software-based implementations, code for the algorithm stored in a memory can be implemented by the processor 202.

The KPI tag system 300 collect lists of tag names, and analog values of tag parameter stored in DCS historian 114 along with their associations to the assets of a process unit. For example, for a simple crude distillation unit, the feed inlet flow tags along with heavy and light diesel oil flowing out of the distillation unit are tag names and these tags will indicate, in their naming convention that they are related to the crude distillation unit, as was explained above for the tag naming conventions of the ANSI/ISA 5.1 standard. The stored data lists of tag names are preferably obtained from the same time frame (e.g., the most recent 6 months up to several years). This historical data is deemed to sufficiently capture the operational relationships to be discovered and extracted by the KPI tag naming system 300.

The tag name lists from the data historian 114 are input to the KPI tag system 300. The primary KPIs are first detected from the lists of tag names. The primary KPIs are defined as those KPIs that are important for process safety, quality, quantity, energy, and cost that are involved in the overall production of the process. Next secondary KPIs are detected. Secondary KPIs are those tags identified as critical to maintaining process efficiency and thereby impact safety, energy, and cost. They are not considered primary KPIs and in aggregate form the process unit level KPIs. The target sets of KPI tags are extracted from those identified in Steps 1 to 3 and stored in persistent storage 212 of device 200 for use by operators or by advanced analytics programs.

The KPI tag system may analyze, detect, and produce KPI tags continuously, periodically, or at other suitable times. This could include, for example, the processor 202 of the device 200 analyzing the lists of tag names to determine whether a controller 106 is suffering from any constraint/limit issues, model quality issues, inferential quality issues, variable mode issues, optimizer configuration issues, or process variable noise/variance issues and update the KPI tags extracted and used by the industrial process control and automation system. In general, each operational problem identified can affect the operation of the controller 106 and prevent the controller 106 from achieving the most beneficial operation possible. As noted above, the impacts could be expressed in any suitable terms, such as excess material usage, excess energy usage, reduced product production, or lost economic costs (and the lost economic costs could themselves be a measure of things like excess material usage, excess energy usage, or reduced product production).

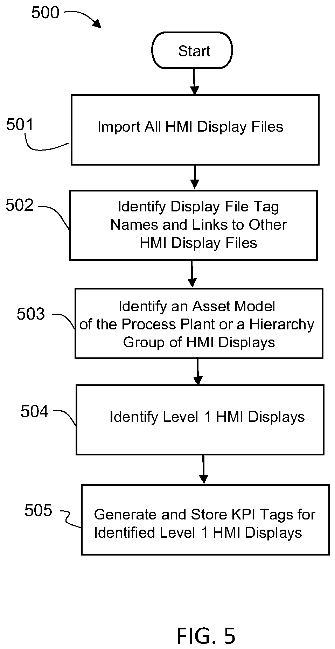

FIG. 5 illustrates a block diagram representing an automated method for detecting KPI tags from an industrial process using the Human Machine Interface (HMI) displays of a process control and automation system, according to another example embodiment. Level 1 HMI display graphics are intended to allow plant operators, shift supervisors and operation managers to visualize an overview of the entire facility and the key process variables associated with it. Process plant owners design and maintain Level 1 HMI displays with tag names to monitor unit performance in control rooms.

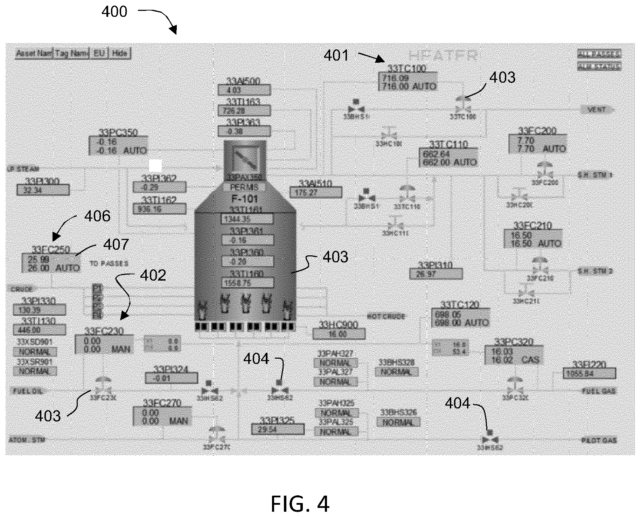

Fig. 4 illustrates a Level 1 HMI display 400, displayed at an operator console 110 and used to provide information to an operator and to receive information from an operator. The display 400, for example, includes an overview of the process being controlled and monitored by the industrial process control and automation system. The display 400 includes information identifying a current state of an industrial process to the operator, such as values of various process variables and warnings, alarms, or other states associated with the industrial process using the tag naming convention of the ANSI/ISA 5.1 standard. For example, the display 400 may include various tag names for the functional aspects of the process being monitored, such as, 401 that represents tag name 33TC120 and the heater outlet temperature, or 402 representing tag name 33PC320 and the fuel gas pressure. Each of the tag names in the example are linked to various assets used by the monitored process, in this example, a gas fired boiler 403. As can be seen at display 400 various valves 403 and actuators 404 used in this display, each including their own tag names.

The Level 1 HMI display also receives information affecting how the industrial process is controlled, such as by receiving setpoints or control modes for process variables controlled by the controllers 106 or other information that alters or affects how the controllers 106 control the industrial process. As shown for example by 406 depicting the crude inlet flow by tag 33FC250 showing in box 407 a flow rate of 25.99 and setpoint of 26.00. For such level 1 HMI displays the tag names of the HMI displays can be imported into a KPI tag system 400 executing in computing device 200 for the automated extraction of KPI tags from the tag names used in the HMI displays. The firmware embodied in a computer program run by a processor 202 of the computing device 200 is used to implement the automated extraction of the KPI tags using the method illustrated by FIG. 4. The input HMI display tag names are parsed by the KPI tag system 400 to extract KPI tags.

With renewed reference to FIG. 5 a method for the automated detection and extraction of KPI tags from Level 1 HMI display tag names is illustrated. In the KPI tag system 500, in step 501, all HMI display files for a process plant are imported into a computing device 200 illustrated in FIG. 2. Device 200 has stored firmware embodied in a computer program run by a processor 202 of the computing device 200 for implementing the KPI tag system 500. The processor 202 can comprise a digital signal processor (DSP), a microcontroller, an application specific integrated circuit (ASIC), a general processor, or any other combination of one or more integrated processing devices. However, as known in the art, disclosed automated KPI tag identification systems may also be implemented by hardware. Regarding hardware-based implementations, algorithm equations can be converted into a digital logic gate pattern, such as using VHDL (a Hardware Description Language) that can then be realized using a programmable device such as a field-programmable gate array (FPGA) or a dedicated application-specific integrated circuit (ASIC) to implement the logic gate pattern. Regarding software-based implementations, code for the algorithm stored in a memory can be implemented by the processor 202.

In the next step 502, for each of the imported HMI display file tag names and links to other HMI display files are identified. Each HMI display is organized in a hierarchy with each display providing more detail than the display of the previous level. For example, Level 1 HMI displays provide an overview of the control operator's entire span of responsibility. A level 2 HMI display is a process unit control display which is considered the control operator's primary operating display used during normal operations, routine changes, and monitoring of a plant process unit. A Level 3 HMI display is a process unit detail display of non-routine operations and typically provides sufficient information to facilitate process diagnostics. Therefore, the links between other Level 1 HMI displays and also between Level 1 displays to Level 3 and 4 HMI displays provide important associations that make use of the extracted KPI tags relevant to the tasks to be accomplished by Level 1 and Level 2 displays.

In step 503, an asset model of the process plant or a hierarchy group of the HMI displays for each area of the process is identified. For example, Level 1 HMI displays are crucial as they provide contextual information; however, they may not contain all information users need to perform their jobs. Instead, they provide current state of operations, indications of abnormal situations that may be occurring, and quick and easy access to additional information. Level 2 HMI displays should match the plant process operation and provide easy access to related displays in the display hierarchy. There may be multiple Level 2 displays for the same equipment to cover specific situations such as startup, normal operation, state or product transitions, and shutdown. Since both Level 1 and Level 2 HMI displays can use KPIs the hierarchy between these display levels is important to provide relevant KPI tags.

In step 504, using the tag names, and the identified display file linkages between the HMI displays detected in step 2 and with imported HMI navigation logs and pattern data stored in a database, such as for example, historian 114, the Level 1 HMI displays are identified.

In step 505 the KPI tags are generated for the identified Level 1 HMI displays and stored in persistent storage 212 of device 200 for use by control operators or by advanced analytics programs.

The KPI tag systems 300 and 500 of the present embodiment automatically detects a candidate list of KPIs, which can then be easily mapped to suitable dashboards or HMI displays for centralized monitoring. Automatically detected secondary KPI lists can also bring in early warnings on process efficiency and degradation and may be used in Level 2 HMI displays. Updates to KPI tags due to changes in plant configuration, additions, and updates to tag names along with retrofits or expansions of production capacity can all be catered to with less manual intervention and detection.

Although FIG. 3 and FIG. 5 illustrates one example of methods 300, 500 for detecting and extracting KPI tags from tag names in advanced control operations for industrial control systems, various changes may be made to FIGS. 3 and 5. For example, while shown as a series of steps, various steps in FIG. 3 and 5 could overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C.
§ 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method, comprising: providing historical process data for an industrial process run by an industrial process control and automation system (100) having processing equipment identified by tag names the tag names and process data stored in a data historian (114), and a processor (202) and a memory (212) implementing a Key Performance Indicator (KPI) tag system (300), the KPI tag system:
collecting (301) a list of tag names and data values stored in the data historian;
detecting by the KPI tag system primary KPIs (302) from the tag names and process values;
detecting by the KPI tag system secondary KPIs (303) from the tag names and process values;
extracting (304) a set of KPI tags from the primary and secondary KPIs; and
storing the extracted KPI tags in the memory.

2. The method of claim 1, wherein the primary KPIs are selected from tag names utilized in process safety, quality, quantity energy and cost in the industrial process.

3. The method of claim 1, wherein the secondary KPIs are selected from tag names critical to maintaining process efficiency that may impact safety and cost.

4. The method of claim 1, wherein the extracted set of KPI tags stored in the memory (212) is a candidate list of KPI tags that can be selected for display to an operator console (110) and usage by a control room operator.

5. The method of claim 1, wherein the extracted set of KPI tags stored in the memory (212) is a candidate list of KPI tags that can be used by an advanced analytics program.

6. A computing device, comprising:
a processor (202) having an associated memory (212) configured for implementing a Key Performance Indicator (KPI) tag system (300) that supports an industrial process run by an industrial processing control and automation system (100) having processing equipment including a database of tag names and process data, said KPI tag system implementing:
collecting (301) from the database the list of tag names and process data;
detecting primary KPIs (302) from the list of tag names and process data;
detecting secondary KPIs (303) from the list of tag names and process data;
extracting (304) a set of KPIs tags from the primary and secondary KPIs; and
storing the extracted KPI tags in the memory.

7. The device of claim 6, wherein the database is a data historian (114) that stores a list of KPI tag names used in the industrial process and historical process data developed by the industrial process.

8. The device of claim 7, wherein the list of tag names are preferable obtained from the same time frame.

9. The device of claim 8, wherein the time frame is between 6 months and 5 years.

10. The device of claim 7, wherein the data historian is located in computing cloud (118).

11. The device of claim 6, wherein the extracted set of KPI tags stored in the memory (212) is a candidate list of KPI tags that can be selected for display to an operator on an operator console (110).

12. The device of claim 6, wherein the extracted set of KPI tags stored in the memory (212) is a candidate list of KPI tags that can be used in an advanced analytics program.

13. The device of claim 7, wherein the KPI tag names stored in the data historian (114) use the tag naming conventions of the ANSI/ISA 5.1 standard.
